(19)

Europäisches
Patentamt

European
Patent Office

Office européen
des brevets

(11) **EP 2 787 470 A1**

(12) **EUROPEAN PATENT APPLICATION**

(43) Date of publication:
08.10.2014 Bulletin 2014/41

(51) Int Cl.:
**G06Q 10/00** (2012.01)

(21) Application number: **14162640.8**

(22) Date of filing: **31.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.04.2013 JP 2013079007**

(71) Applicant: **Nihon Kohden Corporation**
**Shinjuku-ku**
**Tokyo (JP)**

(72) Inventors:
• **Takahira, Izuru**
**Shinjuku-ku, Tokyo (JP)**
• **Nagai, Yutaka**
**Shinjuku-ku, Tokyo (JP)**

(74) Representative: **Grünecker, Kinkeldey,**
**Stockmair & Schwanhäusser**
**Leopoldstrasse 4**
**80802 München (DE)**

(54) **Method for displaying assessment data on an external quality control system**

(57)    A method includes acquiring the assessment data for external quality control that are an aggregate of measured data which are obtained by measuring a first quality control sample and a second quality control sample with each of a plurality of analyzers, creating an assessment coordinate system which shows statistical distances among the measured data by statistically processing the assessment data and has a first axis that represents first measured values which are measured values of the first quality control sample and a second axis that represents second measured values which are measured values of the second quality control sample, and displaying on the assessment coordinate system respective sets of the measured data of the assessment data, a first permissible range showing a range where the first measured values are permitted, and a second permissible range where the second measured values are permitted.

FIG. 1

EP 2 787 470 A1

**Description**

BACKGROUND

The invention relates to a method for displaying assessment data on external quality control.

Clinical laboratory tests are important in diagnosing or preventing a disease and have been widely practiced in a hospital, a clinic, and the like. In a clinical laboratory test, a sample acquired from a patient is measured by analyzers, or the like. When the measured value includes an accidental error, a diagnosis of a disease might not be correctly formed.

Accordingly, it is verified by a statistical technique whether or not the measured value is trustable, thereby performing quality control for controlling precision and trueness in the measurement of the sample.

The quality control is roughly divided into internal quality control and external quality control. The internal quality control is to control quality of measurement performed in a single measurement institution (a hospital, a clinic, a clinical laboratory test center, or the like). In the meantime, the external quality control corresponds to a technique of measuring a single quality control sample at a plurality of measurement institutions and statistically organizing and analyzing the obtained measured data.

Internal quality control makes it possible to control precision of measurement but relative assessment of trueness is difficult therein. On the other hand, external quality control makes it possible to control both precision and trueness of measurement and hence is useful.

For instance, Japanese Patent No. 4436879 discloses a method for aggregating sample data by connecting analyzers with a controller via network, and the external quality control which uses the aggregated sample data.

Under the external quality control method described in Japanese Patent No. 4436879, relative assessment that involves comparing other institutions with each other in terms of a statistical distance is performed with reference to a generated control chart. However, absolute assessment that involves comparing actually measured values with each other is not performed.

SUMMARY

This invention provides a method for displaying assessment data for external quality control, in which general assessment including relative assessment and absolute assessment of data measured in respective institutions is quickly performable.

It is therefore one aspect of the invention to provide a method for displaying assessment data on external quality control including acquiring the assessment data for external quality control that are an aggregate of measured data which are obtained by measuring a first quality control sample and a second quality control sample with each of a plurality of analyzers, creating an assessment coordinate system which shows statistical distances among the measured data by statistically processing the assessment data and has a first axis that represents first measured values which are measured values of the first quality control sample and a second axis that represents second measured values which are measured values of the second quality control sample, and displaying on the assessment coordinate system respective sets of the measured data of the assessment data, a first permissible range showing a range where the first measured values are permitted, and a second permissible range where the second measured values are permitted.

It is therefore an another aspect of the invention to provide the method according to the above aspect, in which measured data of a specific analyzer and measured data of other analyzers are displayed in different forms on the assessment coordinate system.

BRIEF DESCRIPTION OF THE DRAWINGS

Fig. 1 is a block diagram illustrating an example of an external quality control system of the invention for implementing a method for displaying assessment data for external quality control;
Fig. 2 is a diagram illustrating an example of assessment data stored in a memory of a management apparatus shown in Fig. 1; and
Fig. 3 is a diagram illustrating an example of an assessment coordinate system appearing on a display of the management apparatus shown in Fig. 1.

DETAILED DESCRIPTION OF EMBODIMENTS

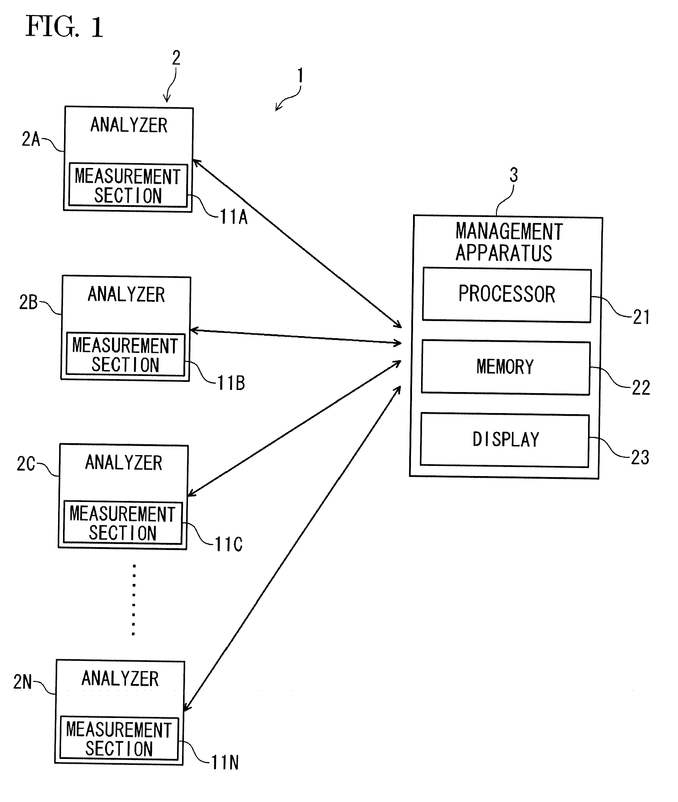

An exemplary embodiment of a method for displaying assessment data for external quality control according to the invention is described with reference to the accompanying drawings. Fig. 1 illustrates a configuration of an external quality control system 1 for implementing the method for displaying assessment data for external quality control.

As shown in Fig. 1, the external quality control system 1 is provided with a plurality of analyzers 2 (an analyzer 2A, an analyzer 2B, an analyzer 2C , ... , and an analyzer 2N) for measuring a sample and a management apparatus 3 that manages the measured data. The analyzers 2 and the management apparatus 3 are connected to each other in a communication-enabled manner via a network, for instance, the Internet.

The analyzers 2 are devices that measure a quality control sample and installed in an institution, such as a hospital and a sanitary survey laboratory. For instance, a hematology analyzer that measures a blood cell count, hemoglobin concentration, a hematocrit value, and the like, by an electric resistance method, flow cytometry, or the like, may be used as the analyzers 2.

The analyzers 2 are provided with measurement sections 11 (11A, 11 B, 11C, ... , and 11N) that measure data by analyzing a sample. Each of the analyzers 2 analyzes two samples having different concentrations, for instance, a Low control (an example of a first quality control sample) and a Normal control (an example of a second quality control sample), to measure data. The Low control herein refers to a quality control sample that has a concentration level of a blood test item which is lower than a reference range, and the Normal control herein refers to a quality control sample that has a concentration level of the blood test item which falls within the reference range. The analyzers 2 transmit to the management apparatus 3 the data that are obtained through measurement by the measurement sections 11.

The management apparatus 3 is a device that aggregates measured data acquired by the respective analyzers 2 and analyzes and surveys the aggregated measured data. The management apparatus 3 is installed in a third-party institution that is independent of the institutions having the analyzers 2. In other words, the management apparatus 3 performs the external quality control.

The management apparatus 3 may have a processor 21, a memory 22, and a display 23.

The processor 21 creates a two-dimensional coordinate system (an example of an assessment coordinate system) based on statistically-processed data and the measured data of the samples having different concentrations, and plots a graph of the measured data.

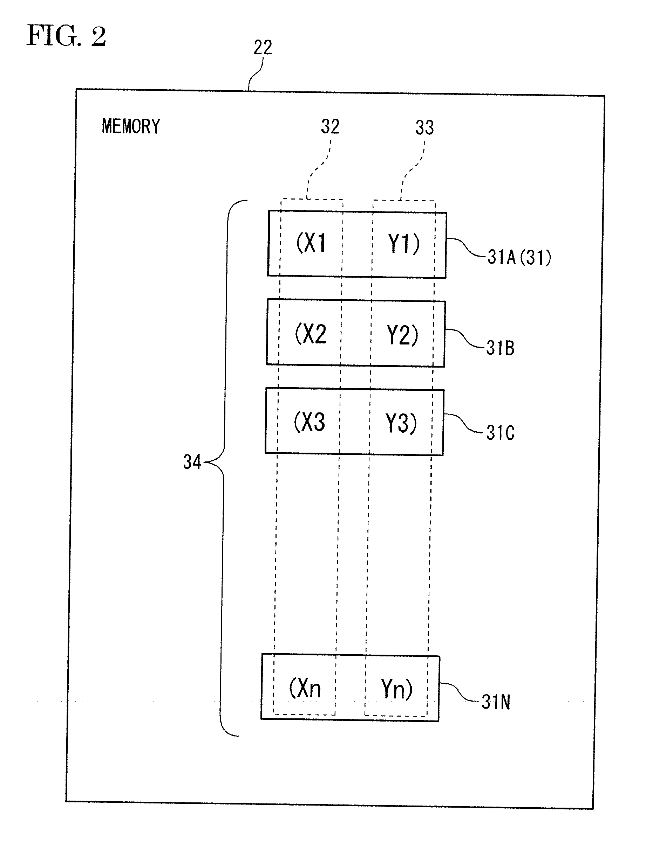

The memory 22 stores an aggregate of the measured data from the respective analyzers 2 and data processed by the processor 21. The process will be described in detail with reference to Fig. 2.

The display 23 displays a graph plotted on the two-dimensional coordinate system by the processor 21. In the embodiment, the display 23 is made up of, for instance, a display monitor of a personal computer connected to the Internet.

Fig. 2 illustrates an example of data stored in the memory 22 of the management apparatus 3.

The memory 22 stores measured data (X1, Y1) 31A measured by the measurement section 11A of the analyzer 2A, measured data (X2, Y2) 31 B measured by the measurement section 11 B of the analyzer 2B, measured data (X3, Y3) 31C measured by the measurement section 11C of the analyzer 2C, ... , and measured data (Xn, Yn) 31 N measured by the measurement section 11N of the analyzer 2N. X1, X2, ..., Xn denote Normal measured values 32 (examples of second measured values) illustrating measured values of the Normal control. Y1, Y2, ..., Yn denote Low measured values 33 (examples of first measured values) illustrating measured values of Low control. Assessment data 34 that are an aggregate of measured data 31 (31A, 31 B, ..., 31 N) are data for external quality control.

A procedure of processing performed by the analyzers 2 and the management apparatus 3 of the external quality control system 1 is now described.

First, the third-party institution distributes control blood that is a quality control sample to each of institutions that participate in an external research (external survey). Low control blood and Normal control blood that differ from each other in terms of a concentration are distributed as the control blood. In order to lessen an error which proceeds from a difference in production lot of control blood, the control blood in the same production lot is distributed to each of the institutions.

The analyzer 2 at each of the institutions measures the control blood under a predetermined method. The predetermined method is herein given predetermined measurement conditions, for instance, a date and hour for measuring control blood and the number of times measurement is performed. Measured data are transmitted from each of the analyzers 2 to the management apparatus 3 via the Internet.

Subsequently, the management apparatus 3 receives the measured data 31 from each of the analyzers 2 and stores the measured data 31 into the memory 22 as assessment data for external quality control.

The management apparatus 3 also calculates values that serve as criteria for a relative comparison among the analyzers 2 by conducting a statistic processing to the assessment data 34 which is the aggregate of the acquired measured data 31.

For instance, the management apparatus 3 calculates an average of the measured data 31 and a standard deviation (SD) that represents an average dispersion degree of the measured data 31 based on the calculated average of the measured data 31 and the measured data 31. Moreover, a standard deviation index (SDI) that serves as an index of relative exactness is calculated from the standard deviation. The standard deviation index is calculated by following formula (1) wherein "V" is measured value and "A" is an average of the measured data.

$$\mathrm{SDI} = \left(\mathrm{V} - \mathrm{A}\right)/\mathrm{SD} \qquad (1)$$

The management apparatus 3 creates a two-dimensional coordinate system that illustrates statistical distances among the measured data 31 of the respective analyzers while the calculated SDI is taken as a standard. The management apparatus 3 also plots a graph, which illustrates the measured data (X1, Y1) 31A, (X2, Y2) 31 B, and ... (Xn, Yn) of the assessment data 34, on the two-dimensional coordinate system.

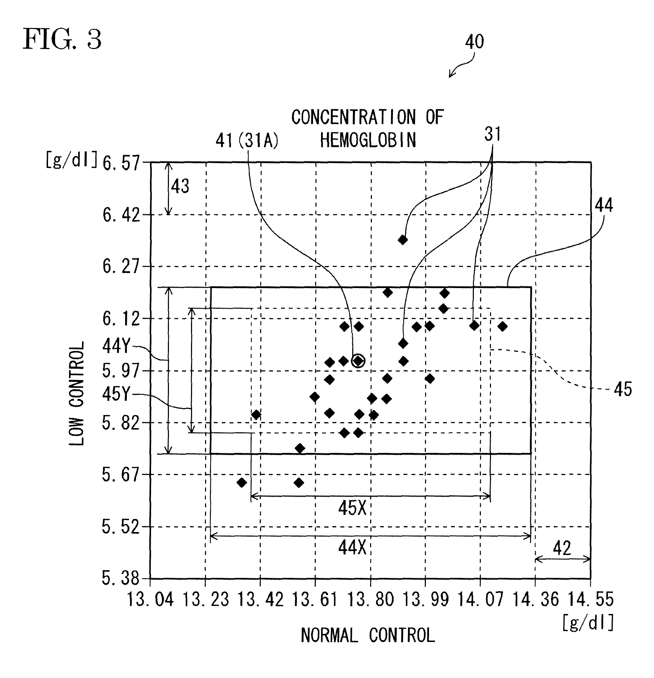

Fig. 3 illustrates a graph 40 on which the measured data 31 of hemoglobin concentration in blood is plotted. Dots having a rhombic pattern in the graph 40 are the measured data 31 measured by the respective analyzers 2.

As illustrated, the management apparatus 3 displays one graduation (designated by a double-arrowed segment 42) of the graph 40 in its X-axis direction as one unit (one SDI of the Normal standard) of a statistical distance in assessment data of the Normal control. In addition, the management apparatus 3 displays one graduation (a double-arrowed segment 43) of the graph 40 in its Y-axis direction as one unit (one SDI of the Low standard) of the statistical distance in assessment data of the Low control. Thus, a two-dimensional coordinate system that shows statistical distances among the measured data 31 by one SDI of the Normal standard and one SDI of the Low standard is formed.

The management apparatus 3 displays on the X axis (an example of second axis) of the graph 40 graduation numerals that represent a concentration [g/dL] of the Normal control and also displays on the Y axis (an example of first axis) gradation numerals that represent a concentration [g/dL] of the Low control. A difference among the measured data 31 is displayed on the two-dimensional coordinate system with actually measured values that are made up of Normal measured values and Low measured values.

The management apparatus 3 displays on the graph 40 an allowable limit 44 of error in difference among analyzers, wherein the allowable limit 44 is set with reference to an assessment standard of rank D which is a goal of an improvement in the external survey performed nationwide. The range 44 is a goal range of an allowable error. In the embodiment, the range 44 that is slightly narrower than the standard of the rank D is set and displayed on the graph 40.

The range 44 is defined by an error range in which Low measured values of Low control are permitted in view of a current technical level and an error range in which Normal measured values of Normal control are permitted in view of a current technical level. In the graph 40 shown in Fig. 3, the range 44 is defined by a segment 44Y (an example of a first permissible range) and a segment 44X (an example second permissible range). In Fig. 3, a double arrow which extends in the Y axis direction defines the segment 44Y and a double arrow which extends in the X axis direction defines the segment 44X. The segment 44Y is set to have a range from about -4% to about +4% with respect to the average of the Low control, 5.97, and the segment 44X is set to have a range from -4% to +4% with respect to the average of the Normal control, 13.80.

The management apparatus 3 displays on the graph 40 an allowable limit 45 of error in a difference among analyzers, wherein the range is set with reference to a clinical allowable error limit on hemoglobin that is a blood test item. The clinical allowable error limit is, for instance, a limit on errors in blood cell measured value proposed by Japanese Committee for Clinical Laboratory Standards (JCCLS). A proposed HGB (Hemoglobin) value is a value in a range from -3% to +3% with respect to an average value of measured data.

The range 45 is a target range of allowable errors that is settable by a medical doctor of each institution.

The range 45 is defined by a segment 45Y (an example of first allowable range) and a segment 45X (an example of second allowable range). In Fig. 3, a double arrow which extends in the Y axis direction defines the segment 45Y and a double arrow which extends in the X axis direction defines the segment 45X. The segment 45Y is set to have a range from about -3% to +3% with respect to the average of the Low control, and the segment 45X is set to have a range from about -3% to +3% with respect to the average of the Normal control. The range 45 is set so as to become slightly narrower than the range 44 and shifted closer to a safety side than the range 44.

As above, statistical distances that are relative values, the gradation numerals that are absolute values, and the goal ranges of allowable errors in the measured data 31 are displayed. As a result, the graph 40 capable of relative and absolute comparisons of the measured data 31 is displayed.

For instance, measured data 31 with a circle 41 on the graph 40 is taken as measured data $(X1, Y1)$ 31A measured by the analyzer 2A. The measured data $(X1, Y1)$ 31A, illustrates that Normal measured value $X1$ is 13.75 [g/dL] and Low measured value $Y1$ is 6.00 [g/dL]. In this case, a statistical distance of the measured data $(X1, Y1)$ 31A from the average of the Normal control is -0.3 SDI and a statistical distance of the measured data $(X1, Y1)$ from the average of the Low control is +0.2 SDI. Values of measured data, $(X1, Y1) = (13.75, 6.00)$, fall within the range 44 of the allowable error limit and the range 45 of the allowable error range. A difference between the measured data $X1$ and an average of 13.80 of the Normal control is -0.05 [g/dL]. A difference between the measured data $Y1$ and an average of 5.97 of the Low control is +0.03 [g/dL].

The management apparatus 3 sends, as a survey result of external quality control, the created graph 40 to each of the analyzers 2 via the Internet. In this case, the graph 40 to be sent illustrates the measured data 31A corresponding to the analyzer 2 that is a destination of the graph 40 in a display form that differs from a display form of the measured data 31 corresponding to the other analyzers. For instance, the measured data 31A is displayed with the circle 41 as shown in Fig. 3.

Each of the analyzers 2 receives the survey result sent from the management apparatus 3. With reference to the sent graph 40, the evaluator of each of the analyzers 2 performs a relative comparison of the evaluator's institution with respect to the analyzers of the other institutions as well as performing an absolute comparison of the analyzer 2 of the evaluator's institution, thereby determining a necessity for calibration of the analyzer 2.

As described above, under the method for displaying assessment data for external quality control, the respective sets of measured data 31 (31A, 31 B, ..., 31 N) of the assessment data 34 are displayed on the two-dimensional coordinate system that shows statistical distances. Accordingly, the evaluator can easily, visually ascertain the statistical distance with reference to the average of the measured data and quickly perform statistical assessment of the individual analyzer 2.

Further, the two-dimensional coordinate system has the Y axis that represents the Low measured values 33 which are measured values of the Low control and the X axis that represents the Normal measured values 32 which are measured values of the Normal control. The range (the segment 44Y of the range 44) where the Low measured values 33 are permitted and the range (the segment 44X of the range 44) where the Normal measured values 32 are permitted are plotted on the two-dimensional coordinate system. As above, displaying the goal value of the absolute value enables the evaluator to easily check each of the sets of measured data 31; namely, whether or not the Low measured values 33 of the measured data 31 fall within the segment 44Y of the goal value and whether or not the Normal measured values 32 of the measured data 31 fall within the segment 44X of the goal value, by observing the two-dimensional coordinate system. Consequently, the evaluator can quickly perform absolute assessment of the individual analyzer 2.

As above, under the method for displaying assessment data for external quality control, relative positioning and absolute positioning of the respective sets of the measured data 31 are displayed as a list on the graph 40 of the two-dimensional coordinate system. Accordingly, the evaluator can quickly perform general assessment of each of the analyzers 2, including relative assessment and absolute assessment, by observing one graph 40.

Further, the measured data 31 of the analyzer of the evaluator's institution and the measured data 31 of the analyzers of other institutions are displayed in different display forms. Thereby, general assessment of the analyzer of the evaluator's institution, including relative assessment and absolute assessment, can be quickly performed. In addition, the measured data 31 of a specific analyzer other than the analyzer of the evaluator's institution are displayed in a different display form, whereby general assessment, including relative assessment and absolute assessment, of the analyzer of the other institution of interest can be quickly performed.

The relative and absolute positions of the respective sets of measured data 31 are displayed as a list on the graph 40 of the two-dimensional coordinate system. As a result, when the measured data 31 sent from the other data in a diagonal direction on the graph, it can be quickly determined with high probability that the measured data be incorrect for reasons of the analyzer 2 being out of calibration or a variation in reagent. When only the measured data of the Low control or the measured data of the Normal control deviate from the other measured data, it can be quickly determined with high probability that the measured data could not be accurately measured for reasons of a random error rather than calibration.

The invention is not limited to the embodiment and can be deformed or improved as required. In addition, the constituent elements described in connection with the embodiment are arbitrary and not limited in terms of a material, a shape, a dimension, numerals, a form, the number, and a location for installation, so long as the invention can be fulfilled.

For instance, in the embodiment, an aggregation result is displayed on the two-dimensional graph. However, for instance, the number of types of quality control sample is incremented by one, and the aggregation result may also be displayed by means of a three-dimensional graph. In addition, the measured data of the Normal control are displayed along the X axis, and the measured data of the Low control are displayed along the Y axis; however, the display does not need to be fixed but may be changed in reverse order. Further, a display means which shows area of the allowable limit of error set with reference to the standard for assessing an external survey is not limited to a display means which uses a frame but may be, for instance, a display means which uses a color.

The analyzer 2 is not limited to the blood cell counter. For instance, a blood coagulation analyzer, an immunoassay measurement device, and the like, may also be used as the analyzer 2. Moreover, a coefficient of variation (CV) showing a ratio of a standard deviation to an average in percentage may also be used as a numeral used for comparing variation levels.

Delivery of sample data and return of the aggregation result are performed via the Internet communication. However, the invention is not limited to this and can also be implemented by delivery and return of a recording medium (CD-ROM or the like) or by positing paper data.

With the invention, the evaluator can readily check whether or not the first measured values fall within the first permissible range and whether or not the second measured values fall within the second permissible range by observing the assessment coordinate system. Accordingly, the evaluator may quickly perform absolute assessment of each of the analyzers.

With the invention, for instance, the measured data of the analyzer of the evaluator's institution and the measured data of the analyzers of other institutions are displayed in different display forms, whereby general assessment, including relative assessment and absolute assessment, of the analyzer of the evaluator's institution may be quickly performed. In addition, for instance, measured data of a specific analyzer other than the analyzer of the evaluator's institution are displayed in a different display form, whereby general assessment, including relative assessment and absolute assessment, of the analyzer of the other institution of interest may be quickly performed.

Under the method for displaying assessment data for external quality control according to the invention, the evaluator may quickly perform general assessment, including relative assessment and absolute assessment, by observing the assessment coordinate system.

While the embodiment(s) of the invention has(have) been illustrated and described, it will be appreciated that various changes can be made therein without departing from the spirit and scope of the invention.

## Claims

1.  A method for displaying assessment data on external quality control comprising:

    acquiring the assessment data for external quality control that are an aggregate of measured data which are obtained by measuring a first quality control sample and a second quality control sample with each of a plurality of analyzers; creating an assessment coordinate system which shows statistical distances among the measured data by statistically processing the assessment data and has a first axis that represents first measured values which are measured values of the first quality control sample and a second axis that represents second measured values which are measured values of the second quality control sample; and displaying on the assessment coordinate system respective sets of the measured data of the assessment data, a first permissible range showing a range where the first measured values are permitted, and a second permissible range where the second measured values are permitted.

2.  The method according to claim 1, wherein measured data of a specific analyzer and measured data of other analyzers are displayed in different forms on the assessment coordinate system.

FIG. 1

FIG. 2

# FIG. 3

Europäisches
Patentamt

European
Patent Office

Office européen
des brevets

# EUROPEAN SEARCH REPORT

Application Number

EP 14 16 2640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)<br><br>----- | | INV.<br>G06Q10/00 |

TECHNICAL FIELDS
SEARCHED      (IPC)

G06Q

The present search report has been drawn up for all claims

| Place of search | Date of completion of the search | Examiner |
|---|---|---|
| Munich | 2 June 2014 | Falò, Luca |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................................
& : member of the same patent family, corresponding
    document

EPO FORM 1503 03.82 (P04C01)

**REFERENCES CITED IN THE DESCRIPTION**

**Patent documents cited in the description**

- JP 4436879 B